# EUROPEAN PATENT SPECIFICATION

(11) **EP 1 842 696 B1**
(45) Date of publication and mention of the grant of the patent: **27.02.2013**
(21) Application number: 06712368.7
(22) Date of filing: 26.01.2006
(51) Int. Cl.: B60C 9/18, B60C 9/20, B60C 9/28

(54) **RADIAL TIRE FOR CONSTRUCTION VEHICLE**
GÜRTELREIFEN FÜR ERDBEWEGUNGSMASCHINE
PNEU RADIAL POUR VEHICULE DE CHANTIER

(30) Priority: 28.01.2005 JP 2005021404
(43) Date of publication of application: 10.10.2007
(73) Proprietor: Bridgestone Corporation, Tokyo 104-8340 (JP)
(72) Inventor: KOBAYASHI, Yasuhiko c/o Bridgestone Corporation,, Chuo-ku, Tokyo, 1048340 (JP)
(74) Representative: Waldren, Robin Michael
(86) International application number: PCT/JP2006/301186
(87) International publication number: WO 2006/080373

(56) References cited:
- JP-A- 05 024 413
- JP-A- 08 108 709
- JP-A- 11 170 809
- JP-A- 11 348 509
- JP-A- 2000 264 014
- JP-A- 2001 301 418
- JP-A- 2003 136 911
- JP-A- 2004 196 142
- JP-A- 2005 104 437

## Description

### Technical Field

The present invention relates to a radial tire for a construction vehicle for a large-sized shovel loader which is used in a construction site or the like, and further specifically relates to a radial tire for a construction vehicle that is best suited for use as a deep-groove type tire.

### Background Art

Of the shovel loaders, especially a large-sized shovel loader (an excavation and loading machine) which bucket capacity exceeds 5 m³ is mainly used in mines for loading rocks, and the like, and thus it must run on an extremely rough road surface on which rocks are scattered. Therefore, of performances required of a radial tire for a construction vehicle that is to be mounted on such a large-sized shovel loader, cut resistance has been the most important performance. Therefore, in a tread portion of the radial tire for a construction vehicle, a plurality of belt layers in which steel cords are arranged are disposed for improving penetration resistance such that even if the tire treads on a sharp rock, the sharp rock cannot easily penetrate the belt layers (see patent documents 1 and 2, for example).

In addition, unlike a dump track and the like, which are used for transportation, the shovel loader will not run at a high speed. Therefore, a separation failure at the belt edge resulting from heat generation in the tread portion, repetitive deformation of the belt, or the like, will not occur so frequently as the tire for a dump track.

In order to suppress the occurrence of separation at the belt edge, it is generally practiced to increase the angle of the steel cord constituting the belt layer with respect to the tire circumferential direction for minimizing shear strain at the belt edge that occurs at the time of load imposition. However, for the radial tire for a construction vehicle that is to be mounted on the shovel loader, since the necessity thereof has been low, in order to suppress the occurrence of cut in the tread portion, a structure in which the above-mentioned angle is set at a value as small as 10 to 30 degree, for suppressing the tire outside diameter from growing when internal pressure is filed.
Patent Document 1: Japanese Patent Laid-Open Publication No. 11-170809
Patent Document 2: Japanese Patent Laid-Open Publication No. 2002-274122
Attention is drawn to the discloses of JP 5-24413, JP 8-108709, JP 11-348509 and JP 2001-301418.

### Disclosure of the Invention

### Problem to Be Solved by the Invention

Now, in recent years, in order to improve working efficiency, the shovel loader has been increasingly made larger in size, and higher in power. This results in increase of the vehicle weight, and increase of the load imposed on the front tires at the time of excavation with higher power, and thus a tire which can withstand a higher input load is being required. Also for cut resistance, a still higher performance is being required.

However, improvement by adjusting the belt angle (the angle of the cord constituting the belt layer with respect to the tire circumferential direction) cannot expect a great effect.

Therefore, radial tires of tread type L-4 (Rock Deep Tread) or L-5 (Rock Extra Deep Tread), in which a tread gauge at the outer side of the belts is made thicker, come into use. These are all defined as tire codes classified by application in JATMA.

As a result of this, compression deformation of the tread portion at the time of load imposition becomes larger. Therefore, at the time of load imposition, compressed rubber is forced out toward a lateral direction (the tire width direction), and the shear strain in a portion above the belts is increased, which has rendered separation failure at the belt edge easier to be generated.

As a measure against this, it is effective to form the outermost layer belt (the belt in the outermost layer at the tire radial direction) to be the widest in order to withdraw the failure core portion away from the shear strain concentration region in the portion above the belts, and thereby suppressing the occurrence of separation failure at the outermost layer belt edges. However, the problem of occurrence of separation failure at the edges of respective belts at the inner side of the outermost layer belt has not yet been solved, and in order to solve this problem, it is forced to increase the belt angle with respect to the tire circumferential direction at the sacrifice of the cut resistance.

The present invention has been made in view of the above-mentioned fact, and the object is to provide a radial tire for a construction vehicle that has an extended life-time by suppressing the occurrence of separation failure at the edges of the respective belts without lowering the cut resistance.

### Means for Solving the Problems

The invention according to claim 1 provides a radial tire for a construction vehicle

In the present specification, a non-extensile steel cord refers to a steel cord of which elongation at breakage (Eb) is 1 to 3%, and an extensile steel cord refers to a steel cord of which elongation at breakage (Eb) is 4 to 7%.

Generally, if the aspect ratio of a tire is lower than 80%, the tension load ratio of the tread portion is increased, resulting in an increase in the amount of growth of the tire outside diameter, and deterioration in the cut resistance. Therefore, a reinforcement belt is provided, in which steel cords crossing at an angle within 10 degrees with respect to the tire circumferential direction are arranged, whereby greater rigidity can be ensured compared with a conventional tire. Further, the angle formed by the steel cords with respect to the tire circumferential direction is the same as the angle formed by the steel cords with respect to the tire equatorial plane.

The reinforcement belt has a high rigidity contribution ratio. Therefore, since a significant reduction in rigidity of the tread portion may be caused when a part of the reinforcement belt is broken by cutting, the reinforcement belt should be disposed at the innermost layer of the steel belt layer. In addition, if the aspect ratio of the tire is less than 80%, yet higher rigidity than normal may be required. Therefore, the belt width should be set to at least 40% of the tire width. However, it is not preferable to set the belt width in excess of 60%, since the strain at the belt edge will increase, thereby resulting in a high possibility of the occurrence of separation failure.

Further, most large cuts that reach the belt are concentrated in the central region of the tread portion. Therefore, the main cross belt should have a function of preventing penetration in the event of cutting, as well as a function of ensuring rigidity, and the belt width of the main cross belt should be 50% or more of the tire width. However, it is not preferable to set the belt width in excess of 70%, since the strain at the belt edge will increase, thereby resulting in a high possibility of occurrence of separation failure.

Since the rigidity contribution ratio of the main cross belt has been reduced due to the effect of the reinforcement belt, even if the belt angle is set to be at least 25 degrees with respect to the tire circumferential direction in order to prevent the occurrence of separation failure, the rigidity of the entire steel belt layer will not be reduced, as compared with a conventional tire.

Because the protective belt in the outermost layer in the tire radial direction (the outermost side protective belt) is the widest of the steel belt layer, it protects the edges of the belt at the inner side (the inner side protective belt) against shear strain resulting from compression of the rubber of the thick tread portion. In addition, since the shear strain due to such compression is concentrated in the central region of the tread portion while the edges of the outermost side protective belt are located away from the central region, the occurrence of separation at the edges of the outermost side protective belt can also be suppressed. Further, the angle formed by the steel cords of the outermost side protective belt is in the same direction as that formed by the steel cords of a cross belt having the maximum belt width among the main cross belts (the widest main cross belt). Therefore, the shear strain occurring between the edges of the widest main cross belt and the rubber in vicinity thereof at the time of load imposition is alleviated, and occurrence of separation at the edges of the widest main cross belt can be effectively suppressed.

Further, because the shear strain due to the tread compression is substantially low in the region beyond 75% of the tire width, the belt width of the outermost side protective belt should be equal to or greater than 75% of the tire width in order to dispose the belt edges in that region. However, it is not preferable to set the belt width of the outermost side protective belt in excess of 90% of the tire width, since the respective belt edges will be positioned too close to the tire side surface, which renders the outermost side protective belt susceptible to damage when a cutting force is introduced from the tire side.

A belt in which steel cords are arranged in a direction intersecting the steel cords of the widest cross belt is disposed as a cross belt. Steel cords constituting the inner side protective belt are arranged in the same direction as the steel cords constituting the cross belt, and the inner protective belt is wider than the cross belt. Therefore, the shear strain occurring between the edge of the belt disposed in a direction intersecting the widest cross belt and the rubber in the vicinity thereof is alleviated, which effectively suppresses the occurrence of separation.

The cords of these protective belts are extensile, and can easily imitate the deformation of the rubber in the vicinity thereof Further, since the angle formed by the cords with respect to the tire circumferential direction is at least 30 degrees, the shear strain occurring at the edge is small. Therefore, no separation will occur.

The invention according to claim 1 best suited for use as a flat type radial tire for a construction vehicle for shovel loader, especially in which deep grooves of the tread type L-4 or deeper as defined in JATMA are formed.

The invention according to claim 2 is characterized in that a cord diameter of the steel cord constituting the main cross belts is larger than a cord diameter of the steel cord constituting the reinforcement belts.

In this way, by forming the cord diameter of the steel cord constituting the main cross belt which is located in the radially outer side larger than the cord diameter of the steel cord constituting the reinforcement belt which is located in the radially inner side, the cut resistance can be improved.

The invention according to claim 3 is characterized in that a ratio of the cord diameter of the steel cord constituting the main cross belts to the cord diameter of the steel cord constituting the reinforcement belts is within a range of 1.2 to 2.2.

This is because, if the cord diameter ratio is under 1.2, a sufficient effect of improving the cut resistance cannot be obtained, while, if the cord diameter ratio exceeds 2.2, the tension of the reinforcement belt that is caused when the tire treads on an outshoot will be too high, which may result in the reinforcement belt being cut.

### Effect of the Invention

According to the present invention, a radial tire for a construction vehicle that has an extended life-time by suppressing the occurrence of separation failure at the edges of the respective belts without lowering the cut resistance can be obtained.

### Brief Description of the Drawings

FIG. 1 is a sectional view of a radial tire for a construction vehicle in a tire radial direction pertaining to one embodiment of the present invention;
FIG. 2 is a schematic diagram illustrating an angle formed by a cord of a reinforcement belt with respect to the tire equatorial plane;
FIG 3 is a schematic diagram illustrating an angle formed by a cord of a main cross belt with respect to the tire equatorial plane;
FIG. 4 is a schematic diagram illustrating an angle formed by a cord of a protective belt with respect to the tire equatorial plane; and
FIG. 5 is an explanatory drawing describing examples of tires (a tire of EXAMPLE 1 and a tire of EXAMPLE 2), a tire of COMPARATIVE EXAMPLE 1, a tire of COMPARATIVE EXAMPLE 2, and a tire of CONVENTIONAL EXAMPLE.

### Best Mode for Carrying Out the Invention

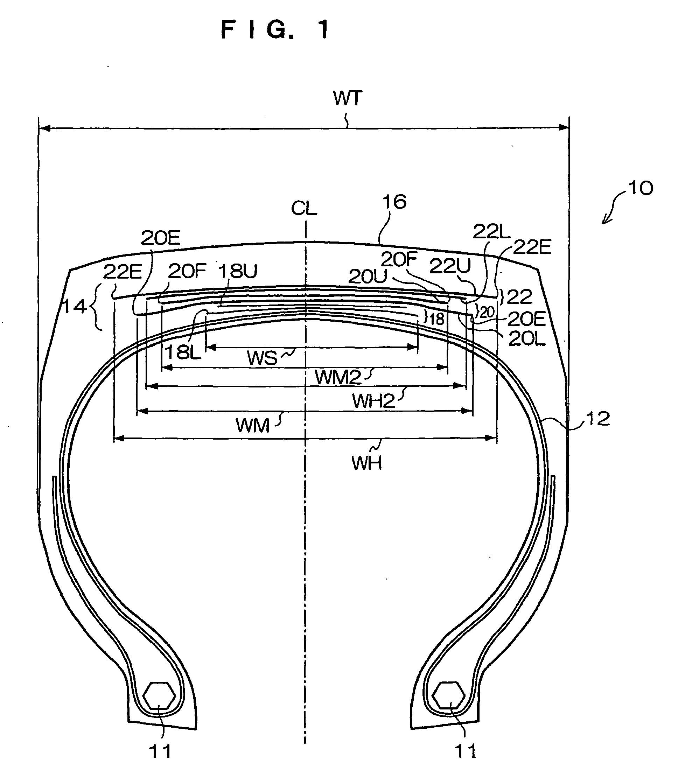

Hereinafter, with reference to an exemplary embodiment, an embodiment of the present invention will be described. As shown in FIG. 1, a radial tire 10 for a construction vehicle pertaining to one exemplary embodiment of the present invention is a tire which is formed to have a tire outside diameter of 2 m or more, and an aspect ratio of 80% or less. This radial tire 10 for construction vehicle includes a steel radial carcass 12 which extends between a pair of bead cores 11, a steel belt layer 14 which is disposed at the tire radial outer side of the steel radial carcass 12, and a tread portion 16 which is disposed at the tire radial outer side of the steel belt layer 14.

The steel belt layer 14 includes two reinforcement belts 18, two main cross belts 20 which are disposed at the tire radial outer side of the reinforcement belts 18, and two protective belts 22 which are disposed at the tire radial outer side of the main cross belts 20. The reinforcement belts 18, the main cross belts 20, and the protective belts 22 are all disposed so as to overlap each other in the tire radial direction.

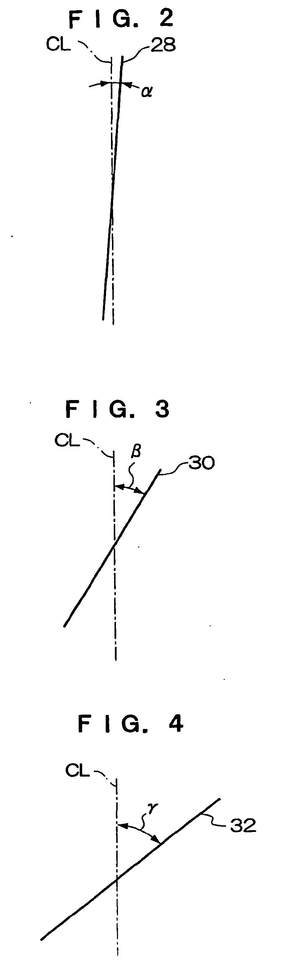

In the respective reinforcement belts 18, non-extensile steel cords 28 are arranged such that an angle α formed by the steel cord with respect to the tire circumferential direction (see FIG 2) is no more than 10 degree.

In the respective main cross belts 20, non-extensile steel cords 30 are arranged such that an angle β formed by the steel cord with respect to the tire circumferential direction (see FIG. 3) is at least 25 degree.

In the respective protective belts 22, extensile steel cords 32 are arranged such that an angle γ formed by the steel cord with respect to the tire circumferential direction (see FIG. 4) is at least 30 degree.

The belt widths WS of the reinforcement belts 18 are within a range of 40 to 60% of the tire width WT, and the belt widths WM of the main cross belts 20 are within a range of 50 to 70% of the tire width WT.

The steel cords of an outermost side protective belt 22U that constitutes the tire radial outermost side of the protective belts 22 are arranged in a same direction as that of the steel cords constituting a widest main cross belt 20L of the main cross belts 20.

The belt width WT of the outermost side protective belt 22U is formed to be wider than the widest main cross belt 20L of the main cross belts 20, and to be within a range of 75 to 90% of the tire width WT.

The steel cords of an inner side protective belt 22L, which is disposed at the inner side of the outermost side protective belt 22U of the protective belts 22, are formed in a different direction from the steel cords constituting the outermost side protective belt 22U. Further, the steel cords of the inner side protective belt 22L are formed in the same direction as the steel cords constituting the other belt of the main cross belts 20 (hereinafter, referred to as an outer side main cross belt 20U). Moreover, the belt width WH2 of the inner side protective belt 22L is wider than the belt width WM2 of the outer side main cross belt 20U, and is narrower than the belt width WM of the widest main cross belt 20L.

Generally, if the aspect ratio of a tire is lower than 80%, the tension load ratio of the tread portion increases, thereby resulting in the amount of growth of the tire outside diameter increasing and the cut resistance deteriorating. Therefore, in the present exemplary embodiment, the reinforcement belts 18 are disposed, in which the steel cords 28 crossing at the angle no more than α = 10 degrees with respect to the tire circumferential direction are arranged, whereby greater rigidity can be ensured compared with a conventional tire.

Further, because these reinforcement belts 18 having a high rigidity contribution ratio are disposed in the innermost layer of the steel belt layer, it is difficult for them to be cut.

Further, since the aspect ratio of the tire is less than 80%, it is necessary to provide a higher rigidity than normal; however, since the belt width WS of the reinforcement belt 18 is formed so as to be equal to or greater than 40% of the tire width WT, the tire has sufficient rigidity.

Furthermore, because the belt width WM of the main cross belt 20 is formed so as to be equal to or greater than 50% of the tire width WT, most of cuts that are large enough to reach the belts can be prevented from reaching the reinforcement belts 18.

Since the rigidity contribution ratio of the main cross belts 20 is reduced due to the effect of the reinforcement belts 18, even if the belt angle (the angle β which the steel cords 30 of the main cross belts 20 form with respect to the tire circumferential direction) is set to be at least 25 degrees with respect to the tire circumferential direction in order to prevent occurrence of separation failure, the rigidity of the entire steel belt layer 14 will not be reduced as compared with a conventional tire.

Because the outermost side protective belt 22U is the widest of the steel belt layer 14, it protects the edges of the inner side protective belt 22L against shear strain resulting from compression of the rubber of the thick tread portion 16. Further, although the shear strain due to such compression is concentrated in the central region of the tread portion 16, edges 22E of the outermost side protective belt are located away from the central region, whereby occurrence of separation at the edges 22E of the outermost side protective belt is suppressed. Further, since the angle formed by the steel cords of this outermost side protective belt 22U is in the same direction as that formed by the steel cords of the widest main cross belt 20L, the shear strain occurring between edges 20E of the widest main cross belt and the rubber in the vicinity thereof at the time of load imposition is alleviated, which effectively suppresses the occurrence of separation at the edges 20E of the widest main cross belt.

The steel cords constituting the inner side protective belt 22L are in the same direction as those of the outer main cross belt 20U that are arranged in a direction intersecting the steel cords of the widest main cross belt 20L. Further, the inner side protective belt 22L is wider than the outer main cross belt 20U. Therefore, the shear strain occurring between belt edges 20F of the outer main cross belt 20U and the rubber in the vicinity thereof is alleviated, which allows effective suppression of the occurrence of separation.

Since the steel cords of these protective belts 22 are extensile, and can easily imitate the deformation of the rubber in the vicinity thereof and, further, the angle formed by the steel cords with respect to the tire circumferential direction is at least γ = 30 degrees, the shear strain occurring at the edge is small. Therefore, no separation will occur.

### <Test Example>

In order to verify the effects of the present invention, the inventor prepared two examples of the radial tire 10 for a construction vehicle pertaining to the above-described exemplary embodiment (hereinafter, referred to as the tire of EXAMPLE 1 and the tire of EXAMPLE 2), two comparative examples of radial tire for a construction vehicle (hereinafter, referred to as the tire of COMPARATIVE EXAMPLE 1 and the tire of COMPARATIVE EXAMPLE 2), and one example of conventional pneumatic radial tire (hereinafter, referred to as the tire of CONVENTIONAL EXAMPLE) to carry out performance evaluations.

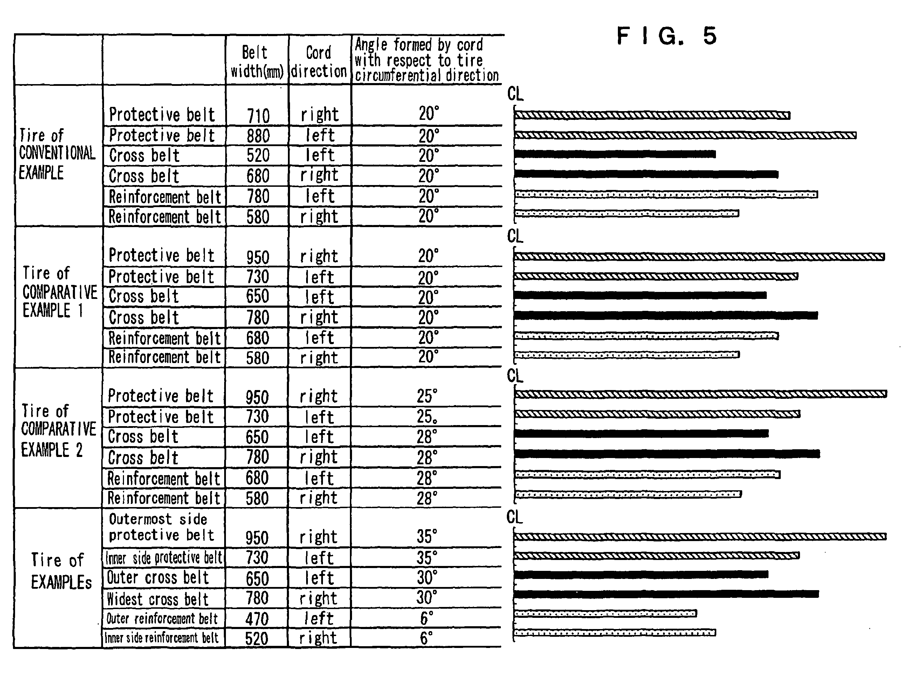

FIG. 5 shown conditions of the respective tires in the present Test Example. In FIG 5, common conditions of the tire of EXAMPLE 1 and the tire of EXAMPLE 2 are shown. In the tire of EXAMPLE 1, the tire of COMPARATIVE EXAMPLE 1, and the tire of COMPARATIVE EXAMPLE 2, the cord diameter of the steel cords constituting the main cross belts and the reinforcement belts are the same of 3.08 mm. In the tire of EXAMPLE 2, the cord diameter of the steel cord constituting the main cross belts is 4.45 mm, and the cord diameter of the steel cord constituting the reinforcement belts is 2.44 mm.

In the present Test Example, sizes of the tires are all 45/65R45 (having a tire width of 1130 mm, and a groove depth of 111 mm). Further, any of the tires respectively include a steel belt layer. This steel belt layer is formed of reinforcement belts disposed in two layers, main cross belts disposed in two layers in the tire radial outer side of the reinforcement belts, and reinforcement belts disposed in two layers in a further tire radial outer side of the main cross belts.

Steel cords are arranged in all of these six belts. For the protective belts, extensile steel cords having an elongation at breakage (Eb) of 6% are used, and for the main cross belts and the reinforcement belts, extensile steel cords having an elongation at breakage (Eb) of 2% are used, respectively.

The tire of COMPARATIVE EXAMPLE 1 is a tire having a structure in which, for suppression of occurrence of separation failure, the protective belt in the tire radial outermost layer are located away from the region in the tread portion where the shear strain is concentrated. The tire of COMPARATIVE EXAMPLE 2 is a tire having a structure in which, for suppression of occurrence of separation failure at the edges of the other belts, the belt angle with respect to the tire equatorial plane is increased in order to reduce the strain.

In the present Test Example, after all of the tires are assembled to a regular rim, respectively, and inflated to a regular internal pressure, and every few tires are mounted on the front side of a shovel loader to carrying out running test on a mining site where the shovel loader is actually used. Here, the "regular rim" refers to the standard rim for an applicable size as specified in the YEAR BOOK (2004 edition) issued by JATMA, for example, and "regular load" and the "regular internal pressure" respectively refer to a maximum load and an air pressure for the maximum load, for the applicable size/ply rating specified as well in the YEAR BOOK (2004 edition) issued by JATMA. If, the TRA Standard or the ETRTO Standard is applied in a place of use or manufacture, the definitions shall be conformed to these standards.

In this running test, since a cut penetrating through the steel belt layer is generated in the tire of COMPARATIVE EXAMPLE 2, the running test is terminated and all of the tires are removed, and the tires are cut so that cracks inside of the tires are visible. As a result, it is found that a large crack is generated at the edge of the protective belt in the tire radial outermost layer of the tire of CONVENTIONAL EXAMPLE.

Then, giving that a length index is 100 for this large crack, the length indices for the other cracks are calculated to provide relative evaluation.

With the tire of PRIOR ART EXAMPLE, other than the above-mentioned large crack, cracks having the length index of 20 to 50 or so are also found to have been produced at the edges of the other belts.

With the tire of COMPARATIVE EXAMPLE 1, only minute cracks having the length index of 10 are found to have been produced at the edges of the protective belt in the tire radial outermost layer. However, at the edges of the other belts, cracks having the length index of 20 to 05 or so are found to have been produced.

With the tire of COMPARATIVE EXAMPLE 2, only minute cracks having the length index of 5 are found to have been produced at the edges of the protective belt in the tire radially outermost layer. Further, at the edges of the other belts, cracks having the length index of 0 to 30 or so are found to have been produced, and thus it can be determined that there is an effect of separation suppression. However, the cut resistance is found to be inferior to that with the conventional tire.

With the tires of EXAMPLE 1 and EXAMPLE 2, no cracks were found to have been produced at the edges of the protective belt in the tire radial outermost layer. The cracks which are produced in the edges of the other belts have the length index of 0 to 15, and thus the effect of separation suppression is remarkable. Further, with the main cross belts in EXAMPLE 1, although fractures of the steel cords that seemed to have been produced by the tire treading on a sharp piece are recognized in four places on the circumference, with the main cross belts in EXAMPLE 2, such a fracture is not found at all.

As described above, the embodiment of the present invention has been described with reference to the exemplary embodiments, however, the above exemplary embodiments are merely examples, and the present invention can be implemented in various ways without departing from the spirit and scope of the present invention. Further, it is needless to say that the scope of the rights of the present invention is not limited by the above-described exemplary embodiments.

### Industrial Applicability

As described above, the radial tire for a construction vehicle pertaining to the present invention is suitable for use as a tire which is provided with a long tire life, occurrence of separation failure at the respective belt edges being suppressed, without reducing cut resistance.

### Explanation of Reference Signs

- 10: Radial tire for a construction vehicle
- 11: Bead core
- 12: Steel radial carcass
- 14: Steel belt layer
- 16: Tread portion
- 18: Reinforcement belt
- 20: Main cross belt
- 20L: Widest main cross belt
- 22: Protective belt
- 22L: Inner side protective belt
- 22U: Outermost side protective belt
- 28: Steel cord
- 30: Steel cord
- 32: Steel cord

## Claims

1. A radial tire (10) for a construction vehicle having an outside diameter equal to or greater than 2 m and an aspect ratio equal to or less than 80%, the tire comprising:
a steel belt layer (14) provided at a tire radial outer side of a steel radial carcass (12), the steel radial carcass extending between a pair of bead cores (11) and the steel belt layer comprising at least six steel belts including:
at least two reinforcement belts (18) that are disposed so as to overlap each other at the tire radial outer side of the steel radial carcass, and in which non-extensile steel cords (28) are arranged such that the angle (α) formed by the steel cords with respect to a tire circumferential direction is no more than 10 degrees;
at least two main cross belts (20) that are disposed so as to overlap each other at the tire radial outer side of the reinforcement belts, and in which non-extensile steel cords (30) are arranged such that the angle(β) formed by the steel cords with respect to the tire circumferential direction is at least 25 degrees; and
two protective belts (22) that are disposed so as to overlap each other at the tire radial outer side of the main cross belts, and in which extensile steel cords (32) are arranged such that the angle(γ) formed by the steel cords with respect to the tire circumferential direction is at least 30 degrees, wherein
the belt widths (WS) of the reinforcement belts are within a range of 40 to 60% of the tire width (WT),
the belt widths (WM) of the main cross belts are within a range of 50 to 70% of the tire width,
the steel cords of an outermost side protective belt (22U) of the protective belts, which is a tire radial outermost side of the protective belts, are arranged in the same direction as the steel cords constituting a main cross belt having a widest width (20L);
the belt width (WH) of the outermost side protective belt is wider than the widest main cross belt of the main cross belts, and is within a range of 75 to 90% of the tire width;
the steel cords of an inner side protective belt (22L) other than the outermost side protective belt of the protective belts are configured in a direction different from the steel cords constituting the outermost side protective belt, and in the same direction as the steel cords of at least one main cross belt other than the widest main cross belt of the main cross belts; and
the belt width (WH2) of the inner side protective belt is wider than the belt width (WM2) of the outer side main cross belt (20U) and narrower than the belt width (WM) of the widest main cross belt.

2. The radial tire for a construction vehicle of claim 1, wherein a cord diameter of the steel cords constituting the main cross belts is larger than a cord diameter of the steel cords constituting the reinforcement belts.

3. The radial tire for a construction vehicle of claim 2, wherein the ratio of the cord diameter of the steel cords constituting the main cross belts to the cord diameter of the steel cords constituting the reinforcement belts is within a range of 1.2 to 2.2.

## Patentansprüche

1. Radialreifen (10) für ein Baufahrzeug, der einen Außendurchmesser, der gleich 2 m oder größer ist, und ein Seitenverhältnis gleich oder kleiner als 80 % hat, wobei der Reifen Folgendes umfasst:
eine Stahlgürtellage (14), die an radialen Reifenaußenseite einer Stahlradialkarkasse (12) bereitgestellt wird, wobei sich die Stahlradialkarkasse zwischen einem Paar von Wulstkernen (11) erstreckt und die Stahlgürtellage wenigstens sechs Stahlgürtel umfasst, die Folgendes umfassen:
wenigstens zwei Verstärkungsgürtel (18), die so angeordnet sind, dass sie einander an der radialen Reifenaußenseite der Stahlradialkarkasse überlappen, und in denen nicht-dehnbare Stahlkords (28) derart angeordnet sind, dass der Winkel (α), der durch die Stahlkords in Bezug auf eine Reifenumfangsrichtung gebildet wird, nicht mehr als 10 Grad beträgt,
wenigstens zwei Hauptquergürtel (20), die so angeordnet sind, dass sie einander an der radialen Reifenaußenseite der Verstärkungsgürtel überlappen, und in denen nicht-dehnbare Stahlkords (30) derart angeordnet sind, dass der Winkel (β), der durch die Stahlkords in Bezug auf eine Reifenumfangsrichtung gebildet wird, wenigstens 25 Grad beträgt, und
zwei Schutzgürtel (22), die so angeordnet sind, dass sie einander an der radialen Reifenaußenseite der Hauptquergürtel überlappen, und in denen nicht-dehnbare Stahlkords (32) derart angeordnet sind, dass der Winkel (γ), der durch die Stahlkords in Bezug auf eine Reifenumfangsrichtung gebildet wird, wenigstens 30 Grad beträgt, wobei
die Gürtelbreiten (WS) der Verstärkungsgürtel innerhalb eines Bereichs von 40 bis 60 % der Reifenbreite (WT) liegen,
die Gürtelbreiten (WM) der Hauptquergürtel innerhalb eines Bereichs von 50 bis 70 % der Reifenbreite liegen,
die Stahlkords eines äußersten seitlichen Schutzgürtels (22U) von den Schutzgürteln, der eine äußerste Reifenradialseite der Schutzgürtel ist, in der gleichen Richtung angeordnet sind wie die Stahlkords, die einen Hauptquergürtel (20L) ausmachen, der eine breiteste Breite hat,
die Gürtelbreite (WH) des äußersten seitlichen Schutzgürtels breiter ist als der breiteste Hauptquergürtel von den Hauptquergürteln und sich innerhalb eines Bereichs von 75 bis 90 % der Reifenbreite befindet,
die Stahlkords eines inneren seitlichen Schutzgürtels (22L), der ein anderer ist als der äußerste seitliche Schutzgürtel von den Schutzgürteln, in einer anderen Richtung als die Stahlkords, die den äußersten seitlichen Schutzgürtel ausmachen, und in der gleichen Richtung wie die Stahlkords wenigstens eines Hauptquergürtels, der ein andere ist als der breiteste Hauptquergürtel von den Hauptquergürteln, konfiguriert sind, und
die Gürtelbreite (WH2) des inneren seitlichen Schutzgürtels breiter als die Gürtelbreite(WM2) des äußeren seitlichen Hauptquergürtels (20U) und schmaler als die Gürtelbreite (WM) des breitesten Hauptquergürtels ist.

2. Radialreifen für ein Baufahrzeug nach Anspruch 1, wobei ein Korddurchmesser der Stahlkords, welche die Hauptquergürtel ausmachen, größer ist als ein Korddurchmesser der Stahlkords, welche die Verstärkungsgürtel ausmachen.

3. Radialreifen für ein Baufahrzeug nach Anspruch 2, wobei das Verhältnis des Korddurchmessers der Stahlkords, welche die Hauptquergürtel ausmachen, zu dem Korddurchmesser der Stahlkords, welche die Verstärkungsgürtel ausmachen, innerhalb eines Bereichs von 1,2 bis 2,2 liegt.

## Revendications

1. Pneu radial (10) pour véhicule de construction ayant un diamètre extérieur supérieur ou égal à 2 m et un rapport d'aspect inférieur ou égal à 80 %, le pneu comprenant :
une couche de ceinturage en acier (14) située sur un côté externe radial de pneu d'une carcasse radiale en acier (12), la carcasse radiale en acier s'étendant entre deux tringles de talon formant paire (11) et la couche de ceinturage en acier comprenant au moins six ceintures en acier incluant :
au moins deux ceintures de renfort (18) qui sont disposées de manière à se chevaucher au niveau du côté externe radial de pneu de la carcasse radiale en acier, et dans lesquelles des câblés en acier non extensibles (28) sont agencés de manière que l'angle (α) formé par les câblés en acier par rapport à une direction circonférentielle du pneu soit, au plus, de 10 degrés ;
au moins deux ceintures transversales principales (20) qui sont disposées de manière à se chevaucher au niveau du côté externe radial de pneu des ceintures de renfort, et dans lesquelles des câblés en acier non extensibles (30) sont agencés de manière que l'angle (β) formé par les câblés en acier par rapport à la direction circonférentielle du pneu soit, au moins, de 25 degrés ; et
deux ceintures de protection (22) qui sont disposées de manière à se chevaucher au niveau du côté externe radial de pneu des ceintures transversales principales, et dans lesquelles des câblés en acier non extensibles (32) sont agencés de manière que l'angle (γ) formé par les câblés en acier par rapport à la direction circonférentielle du pneu soit, au moins, de 30 degrés,
les largeurs de bande (WS) des ceintures de renfort étant dans une plage de 40 à 60 % de la largeur de pneu (WT),
les largeurs de bande (WM) des ceintures transversales principales étant dans une plage de 50 à 70 % de la largeur de pneu,
les câblés en acier d'une ceinture de protection de côté le plus vers l'extérieur (22U) des ceintures de protection, qui est un côté le plus vers l'extérieur, radial, de pneu, des ceintures de protection, étant agencés dans la même direction que les câblés en acier constituant une ceinture transversale principale ayant une plus grande largeur (20L) ;
la largeur de ceinture (WH) de la ceinture de protection de côté le plus vers l'extérieur étant supérieure à la ceinture transversale principale la plus large, et étant dans une plage de 75 à 90 % de la largeur de pneu ;
les câblés en acier d'une ceinture de protection de côté interne (22L) autre que la ceinture de protection de côté le plus vers l'extérieur des ceintures de protection étant configurés dans une direction différente des câblés en acier constituant la ceinture de protection de côté le plus vers l'extérieur, et dans la même direction que les câblés en acier d'au moins une ceinture transversale principale autre que la ceinture transversale principale la plus large des ceintures transversales principales ; et
la largeur de ceinture (WH2) de la ceinture de protection de côté interne étant supérieure à la largeur de ceinture (WM2) de la ceinture transversale principale de côté externe (20U) et inférieure à la largeur de ceinture (WM) de la ceinture transversale principale la plus large.

2. Pneu radial pour véhicule de construction selon la revendication 1, dans lequel un diamètre de câblé des câblés en acier constituant les ceintures transversales principales est supérieur à un diamètre de câblé des câblés en acier constituant les ceintures de renfort.

3. Pneu radial pour véhicule de construction selon la revendication 2, dans lequel le rapport du diamètre de câblé des câblés en acier constituant les ceintures transversales principales au diamètre de câblé des câblés en acier constituant les ceintures de renfort est dans une plage de 1,2 à 2,2.
